# EUROPEAN PATENT APPLICATION

(11) **EP 3 115 563 A1**
(43) Date of publication of application: **11.01.2017**
(21) Application number: 16177644.8
(22) Date of filing: 01.07.2016
(51) Int. Cl.: F01D 25/14, F01D 25/30, F02K 1/82, F16B 5/02, F23R 3/00

(54) **INSULATION SUPPORT SYSTEM FOR AN EXHAUST GAS SYSTEM**

(30) Priority: 06.07.2015 US 201514791540
(71) Applicant: General Electric Company, Schenectady, NY 12345 (US)
(72) Inventor: KIPPEL, Bradly Aaron, Greenville, SC South Carolina 29615 (US); FRESE, Christopher Conrad, Greenville, SC South Carolina 29615 (US)
(74) Representative: Lee, Brenda

(57) **Abstract**

An insulation support system for an exhaust gas system gas turbine includes an outer casing 40 having an inner surface 50 and a liner sheet 60 having an inner surface 62 and that defines an insulation gap between the inner surface of the liner sheet and the inner surface of the outer casing. The system further includes a support member 44 that extends from the inner surface of the outer casing to the inner surface of the liner sheet and a threaded fastener 70 that is fixedly connected to one of inner surface of the outer casing or the support member. The threaded fastener has a fixed depth and is aligned with a fastener hole of the liner sheet. The system further includes a bolt 80 that extends through the fastener hole of the liner sheet and threadingly engages with the threaded fastener.

## Description

### FIELD OF THE INVENTION

The present invention generally involves an exhaust gas system. More particularly, the invention relates to an insulation support system for an exhaust gas system.

### BACKGROUND OF THE INVENTION

A gas turbine generally includes, in serial flow order, an inlet system, a compressor, a combustion section and a turbine. Various exhaust gas related components may be disposed downstream from an outlet of the turbine including but not limited to an exhaust gas diffuser, exhaust plenum, a bypass stack, a diverter damper, a heat recovery steam generator (HRSG), etc... The exhaust gas diffuser defines a flow path for routing relatively hot combustion gases away from the turbine. The hot combustion gases may then be routed through the various outer exhaust gas related components.

The exhaust gas diffuser is typically formed by an outer casing or shell and multiple liner sheets that are coupled to an inner surface of the outer casing and that define an outer flow boundary of the flow path. In order to reduce the temperature of the outer casing, insulation, usually in the form of fiber batts, is packed between the inner surface of the outer casing and an inner surface of each liner sheet.

The liner sheets are installed with welded studs that have nuts to clamp down the individual liner sheets. These nuts need to be torqued to a specific value, and then backed off to allow the liner sheet to float in order to allow for varying thermal growth rates of the liner sheets and/or the outer casing. The nuts are tack welded in place to prevent them from backing off. The liner sheets, the welded studs, nuts and liner sheets define an insulation support system

In order to ensure proper installation of the liner sheets and insulation using known insulation support systems as described above, a calibrated torque wrench, skilled labor and a high level of Quality Control are required. Improperly installed nuts that are too tight may restrict the relative movement of the liner sheets, thus potentially resulting in liner sheet buckling. Improperly installed nuts that are too loose may also allow the liner sheets to rattle, thus potentially compressing and decompressing the insulation which may compromise the thermal insulating value of the insulation. Therefore an improved insulation support system would be useful.

### BRIEF DESCRIPTION OF THE INVENTION

Aspects and advantages of the invention are set forth below in the following description, or may be obvious from the description, or may be learned through practice of the invention.

One embodiment of the present invention is an insulation support system for a gas turbine. The insulation support system includes an outer casing having an inner surface and a liner sheet having an inner surface and defining a fastener hole. An insulation gap is defined between the inner surface of the liner sheet and the inner surface of the outer casing. The system further includes a support member that extends from the inner surface of the outer casing to the inner surface of the liner sheet. A threaded fastener is fixedly connected to one of inner surface of the outer casing or the support member and has a fixed depth. The threaded fastener is substantially aligned with the fastener hole of the liner sheet. The system further includes a bolt that extends through the bolt hole of the liner sheet and that threadingly engages with the threaded fastener.

The present invention also includes a gas turbine. The gas turbine includes a compressor, a combustion section disposed downstream from the compressor, a turbine disposed downstream from the combustion section and an exhaust section disposed downstream from the turbine. The exhaust section includes an insulation support system. The insulation support system includes an outer casing having an inner surface and a liner sheet having an inner surface and that defines a fastener hole. An insulation gap is defined between the inner surface of the liner sheet and the inner surface of the outer casing. The system further includes a support member that extends from the inner surface of the outer casing to the inner surface of the liner sheet and a threaded fastener that is fixedly connected to one of inner surface of the outer casing or the support member. The threaded fastener has a fixed depth and is aligned with the fastener hole of the liner sheet. The system also includes a bolt that extends through the bolt hole of the liner sheet and threadingly engages with the threaded fastener.

Those of ordinary skill in the art will better appreciate the features and aspects of such embodiments, and others, upon review of the specification.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:
FIG. 1 is a functional block diagram of an exemplary gas turbine that may incorporate various embodiments of the present invention;
FIG. 2 is a partial perspective view of a diffuser outer casing half as may incorporate one or more embodiments of the present invention;
FIG. 3 is a partial perspective view of the outer casing half as illustrated in FIG. 2, with liner sheet segments installed;
FIG. 4 is a side view of an exemplary embodiment of an insulation support system according to one embodiment of the present invention; and
FIG. 5 is a side view of an exemplary embodiment of an insulation support system according to one embodiment of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, and the term "axially" refers to the relative direction that is substantially parallel to an axial centerline of a particular component.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents. Although exemplary embodiments of the present invention will be described generally in the context of a liner support system for an exhaust diffuser for a land based power generating gas turbine for purposes of illustration, one of ordinary skill in the art will readily appreciate that embodiments of the present invention may be applied to any type of exhaust gas enclosure or exhaust gas related component such as but not limited to an exhaust gas plenum, a bypass stack, a diverter damper, a heat recovery steam generator (HRSG) and/or a waste heat recovery unit (WHRU). In addition, the exhaust gas enclosure may be associated with any turbomachine type such as a steam turbine, a marine gas turbine or aircraft gas turbine and is not limited to land based power generating gas turbines unless specifically recited in the claims.

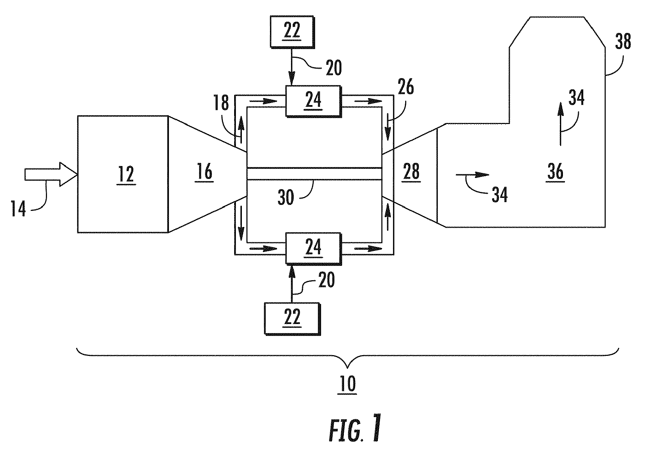

Referring now to the drawings, wherein identical numerals indicate the same elements throughout the figures, FIG. 1 provides a functional block diagram of an exemplary gas turbine 10 that may incorporate various embodiments of the present invention. As shown, the gas turbine 10 generally includes an inlet section 12 that may include a series of filters, cooling coils, moisture separators, and/or other devices to purify and otherwise condition a flow of air 14 or other working fluid entering the gas turbine 10. The air 14 flows from the inlet section 12 to a compressor section where a compressor 16 progressively imparts kinetic energy to the air 14 to produce compressed air 18.

The compressed air 18 is mixed with a fuel 20 from a fuel supply system 22 to form a combustible mixture within one or more combustors 24. The combustible mixture is burned to produce combustion gases 26 having a high temperature, pressure and velocity. The combustion gases 26 flow through a turbine 28 of a turbine section to produce work. For example, the turbine 28 may be connected to a shaft 30 so that rotation of the turbine 28 drives the compressor 16 to produce the compressed air 18. Alternately or in addition, the shaft 30 may connect the turbine 28 to a generator (not shown) for producing electricity. Exhaust gases 32 from the turbine 28 flow through an exhaust section 34 that connects the turbine 28 to an exhaust stack 36 downstream from the turbine 28. The exhaust section 34 may include various components, for example, an exhaust diffuser and a heat recovery steam generator (not shown) for cleaning and extracting additional heat from the exhaust gases 32 prior to release to the environment.

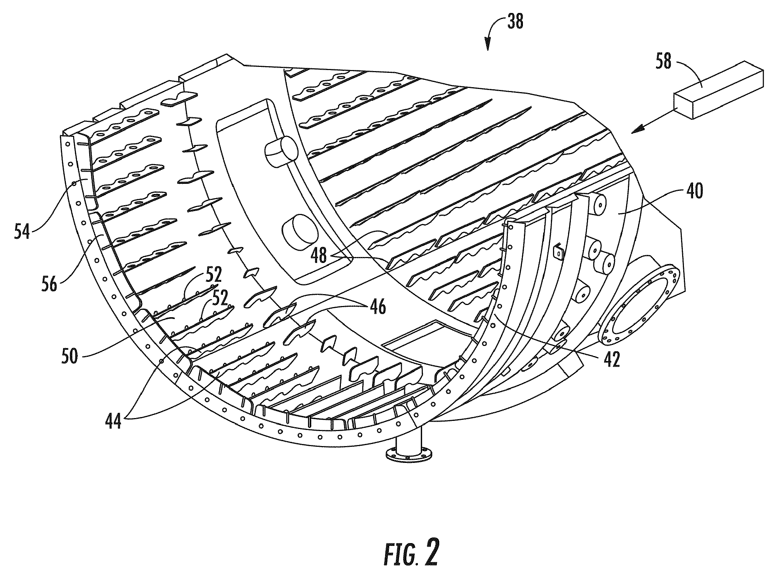

FIG. 2 provides a partial perspective view of an exemplary exhaust diffuser 38 as may incorporate various embodiments of the present invention. As shown in FIG. 2, exhaust diffuser 38 may include a pair of semi-cylindrical outer casing halves, one shown at 40 (hereinafter, "the outer casing"). The halves are substantially identical and, therefore, only one will be described in detail. The outer casing 40 may typically be formed from carbon steel. A forward casing flange 42 may be welded to a forward end of the outer casing 40 to facilitate attachment of the exhaust diffuser 38 to the turbine 28. It is intended that FIG. 2 is merely representative of an exemplary exhaust gas diffuser shape and is not meant to be limiting unless otherwise specified in the claims.

A plurality of groups of axially extending support members 44, 46, 48 are arranged in parallel, in the longitudinal direction of the outer casing 40 and may be welded or otherwise fixedly connected to an interior surface 50 of the outer casing. The length of the support members 44, 46, 48 vary depending on their axial location within the exhaust diffuser 38. One or more of the support members 44, 46, 48 may include one or more threaded studs 52. Forward, transverse support members 54, 56 may be provided at the forward end of the outer casing 40. Insulation 58, preferably in the form of fiber batts (only one shown at 58 for simplicity sake), is installed between the support members 44, 46 and 48 along the length of the outer casing 40. The insulation 58 protects the carbon steel outer casing 40 from exhaust gas temperatures which may exceed 1400 degrees F. In other embodiments, the studs 52 may be welded directly to the casing 40.

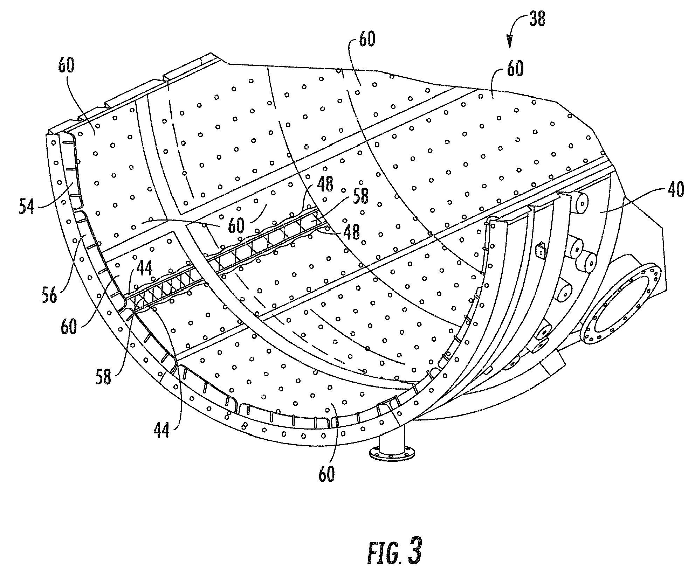

FIG. 3 is a partial perspective view of the outer casing 38 as shown in FIG. 2, with liner sheets 60 and insulation 58 installed. As shown in FIG. 3, the exhaust diffuser 38 further includes a plurality of liner sheets 60, typically formed from stainless steel, and disposed radially inwardly from the inner surface 50 of the outer casing 40. The liner sheets 60 may be provided in arcuate sheets or segments, each extending over a group of the longitudinal support members 44, 46, 48, and overlapping adjacent pairs of forward transverse support members 54, 56. The number of liner sheets 60 may vary depending on exhaust duct size. The liner sheets 60 define an outer flow boundary for the exhaust gases 34 (FIG. 1) flowing from the turbine 28 towards the exhaust stack 36 and provide cover for the insulation.

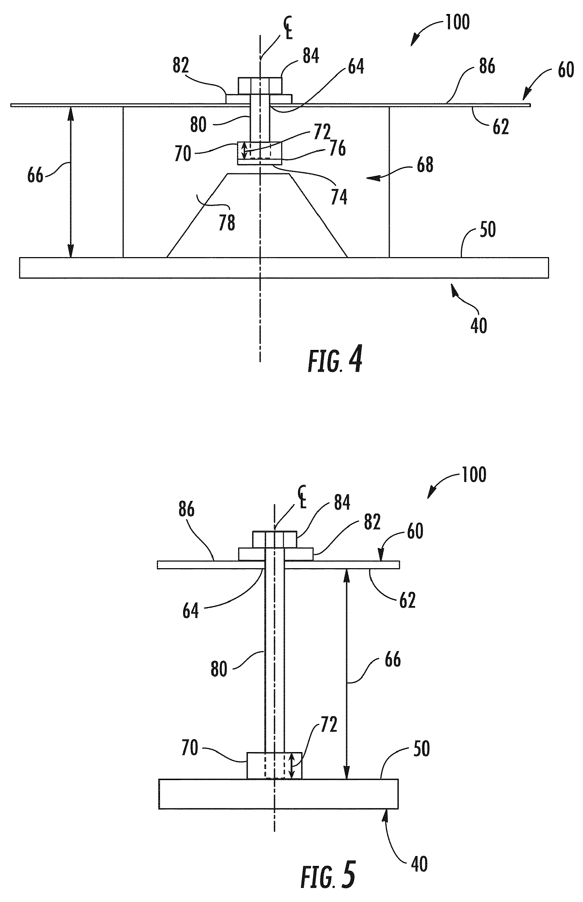

FIG. 4 provides a side view of a first exemplary embodiment of an insulation support system 100, herein referred to as "system", according to one embodiment of the present invention. FIG. 5 provides a side view of a second exemplary embodiment of the system 100 according to another embodiment of the present invention. In various embodiments, as shown in FIGS. 4 and 5, the system 100 includes the outer casing 40 and at least one liner sheet 60. In particular embodiments, an inner surface 62 of the liner sheet 60 extends substantially parallel with the inner surface 50 of the outer casing 40. In other embodiments, the exhaust diffuser may include sloped or curved surfaces thus resulting in the inner surface 62 of the liner sheet 60 extending substantially non-parallel with the inner surface 50 of the outer casing 40. The liner sheet 60 defines a fastener hole 64. An insulation gap 66 is defined between the inner surface 62 of the liner sheet 60 and the inner surface 50 of the outer casing 40. In particular embodiments, as shown in FIG. 4, a support member 68 extends from the inner surface 50 of the outer casing 40 to the inner surface 62 of the liner sheet 68.

As shown in FIGS. 4 and 5, the system 100 further includes a threaded fastener 70. The threaded fastener 70 has a fixed vertical depth as indicated by dimension arrows 72. The threaded fastener 70 may be substantially coaxially aligned with the fastener hole 64 of the liner sheet 60. The threaded fastener 70 may be formed as a nut or may be formed as a tapped boss or other surface feature. In one embodiment, as shown in FIG. 4, the depth 72 of the threaded fastener 70 may be fixed or defined by a stopper 74 that disposed along a bottom surface 76 of the threaded fastener 70.

In particular embodiments, as shown in FIG. 4, the threaded fastener 70 is fixedly connected to the support member 68. For example, in one embodiment, as shown in FIG. 4, the threaded fastener 70 may be fixedly connected to a side wall portion 78 of the support member 68. In particular embodiments, the support member 68 may include one of the axially extending support members 44, 46, 48 (FIG. 2). In other embodiments, the support member 68 may include one of the transverse support members 54, 56 (FIG. 2). In particular embodiments, as shown in FIG. 5, the threaded fastener 70 may be fixedly connected to the inner surface 50 of the outer casing 40.

As shown in FIGS. 4 and 5, the system 100 further includes a bolt 80 that extends through the bolt hole 64 of the liner sheet 60 and that threadingly engages with the threaded fastener 70. In particular embodiments, as shown in FIGS. 4 and 5, the system 100 may further include a spacer 82 such as a washer that is disposed between a head portion 84 of the bolt 80 and an outer surface 86 of the liner sheet 60. The bolt 80 and the depth of the threaded fastener 70 are sized such that the bolt 80 bottoms out when an end of the bolt reaches the fixed depth 72 of the threaded fastener 70. When bottomed out, the head portion 84 of the bolt 80 is in position to clamp the liner sheet 60 such that it does not rattle, but yet provides a gap that allows the liner sheet to freely move in response to thermal growth. The various embodiments of the present invention as shown in FIGS. 4 and 5 and as described herein eliminate the need for special tools or skill to install the liner sheets 60.

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Various aspects and embodiments of the present invention are defined by the following numbered clauses:
1. An insulation support system, comprising:
   an outer casing having an inner surface;
   a liner sheet having an inner surface and defining a fastener hole, wherein an insulation gap is defined between the inner surface of the liner sheet and the inner surface of the outer casing;
   a support member that extends from the inner surface of the outer casing to the inner surface of the liner sheet;
   a threaded fastener fixedly connected to one of inner surface of the outer casing or the support member, the threaded fastener having a fixed depth, wherein the threaded fastener is aligned with the fastener hole of the liner sheet; and
   a bolt that extends through the bolt hole of the liner sheet and threadingly engages with the threaded fastener.
2. The insulation support system as in clause 1, further comprising a spacer disposed between a head portion of the bolt and an outer surface of the liner sheet.
3. The insulation support system as in any preceding clause, wherein the threaded fastener is fixedly connected to a side wall of the support member.
4. The insulation support system as in any preceding clause, wherein the support member is an axially extending support member.
5. The insulation support system as in any preceding clause, wherein the support member is a transverse support member.
6. The insulation support system as in any preceding clause, wherein the threaded fastener is fixedly connected to the inner surface of the outer casing.
7. The insulation support system as in any preceding clause, wherein the bolt bottoms out when the bolt reaches the fixed depth of the threaded fastener.
8. The insulation support system as in any preceding clause, wherein the threaded fastener is a nut.
9. The insulation support system as in any preceding clause, further comprising a stopper disposed along a bottom surface of the threaded fastener, wherein the stopper defines the fixed depth of the threaded fastener.
10. The insulation support system as in any preceding clause, wherein the outer casing and the liner sheet are components of an exhaust gas diffuser portion of the gas turbine.
11. A gas turbine, comprising:
   a compressor, a combustion section downstream from the compressor, a turbine downstream from the combustion section and an exhaust section downstream from the turbine, the exhaust section including an insulation support system, the insulation support system comprising:
      an outer casing having an inner surface;
      a liner sheet having an inner surface and defining a fastener hole, wherein an insulation gap is defined between the inner surface of the liner sheet and the inner surface of the outer casing;
      a support member that extends from the inner surface of the outer casing to the inner surface of the liner sheet;
      a threaded fastener fixedly connected to one of inner surface of the outer casing or the support member, the threaded fastener having a fixed depth, wherein the threaded fastener is aligned with the fastener hole of the liner sheet; and
      a bolt that extends through the bolt hole of the liner sheet and threadingly engages with the threaded fastener.
12. The gas turbine as in any preceding clause, further comprising a spacer disposed between a head portion of the bolt and an outer surface of the liner sheet.
13. The gas turbine as in any preceding clause, wherein the threaded fastener is fixedly connected to a side wall of the support member.
14. The gas turbine as in any preceding clause, wherein the support member is an axially extending support member.
15. The gas turbine as in any preceding clause, wherein the support member is a transverse support member.
16. The gas turbine as in any preceding clause, wherein the threaded fastener is fixedly connected to the inner surface of the outer casing.
17. The gas turbine as in any preceding clause, wherein the bolt bottoms out when the bolt reaches the fixed depth of the threaded fastener.
18. The gas turbine as in any preceding clause, wherein the threaded fastener is a nut.
19. The gas turbine as in any preceding clause, further comprising a stopper disposed along a bottom surface of the threaded fastener, wherein the stopper defines the fixed depth of the threaded fastener.
20. The gas turbine as in any preceding clause, further comprising a layer of insulation disposed within the insulation gap.

## Claims

1. An insulation support system, comprising:
an outer casing having an inner surface;
a liner sheet having an inner surface and defining a fastener hole, wherein an insulation gap is defined between the inner surface of the liner sheet and the inner surface of the outer casing;
a support member that extends from the inner surface of the outer casing to the inner surface of the liner sheet;
a threaded fastener fixedly connected to one of inner surface of the outer casing or the support member, the threaded fastener having a fixed depth, wherein the threaded fastener is aligned with the fastener hole of the liner sheet; and
a bolt that extends through the bolt hole of the liner sheet and threadingly engages with the threaded fastener.

2. The insulation support system as in claim 1, further comprising a spacer disposed between a head portion of the bolt and an outer surface of the liner sheet.

3. The insulation support system as in claim 1 or 2, wherein the threaded fastener is fixedly connected to a side wall of the support member.

4. The insulation support system as in claim 1, 2 or 3, wherein the support member is an axially extending support member.

5. The insulation support system as in claim 1, 2 or 3, wherein the support member is a transverse support member.

6. The insulation support system as in claim 1 or 2, wherein the threaded fastener is fixedly connected to the inner surface of the outer casing.

7. The insulation support system as in any preceding claim, wherein the bolt bottoms out when the bolt reaches the fixed depth of the threaded fastener.

8. The insulation support system as in any preceding claim, wherein the threaded fastener is a nut.

9. The insulation support system as in any preceding claim, further comprising a stopper disposed along a bottom surface of the threaded fastener, wherein the stopper defines the fixed depth of the threaded fastener.

10. The insulation support system as in any preceding claim, wherein the outer casing and the liner sheet are components of an exhaust gas diffuser portion of the gas turbine.

11. A gas turbine, comprising:
a compressor, a combustion section downstream from the compressor, a turbine downstream from the combustion section and an exhaust section downstream from the turbine, the exhaust section including an insulation support system, the insulation support system comprising:
an outer casing having an inner surface
a liner sheet having an inner surface and defining a fastener hole, wherein an insulation gap is defined between the inner surface of the liner sheet and the inner surface of the outer casing;
a support member that extends from the inner surface of the outer casing to the inner surface of the liner sheet;
a threaded fastener fixedly connected to one of inner surface of the outer casing or the support member, the threaded fastener having a fixed depth, wherein the threaded fastener is aligned with the fastener hole of the liner sheet; and
a bolt that extends through the bolt hole of the liner sheet and threadingly engages with the threaded fastener.

12. The gas turbine as in claim 11, further comprising a spacer disposed between a head portion of the bolt and an outer surface of the liner sheet.

13. The gas turbine as in claim 11 or 12, wherein the threaded fastener is fixedly connected to a side wall of the support member.

14. The gas turbine as in claim 11, 12 or 13, wherein the support member is an axially extending support member.

15. The gas turbine as in claim 11, 12 or 13, wherein the support member is a transverse support member.
